# EUROPÄISCHE PATENTSCHRIFT

(11) **EP 3 670 070 B1**
(45) Veröffentlichungstag und Bekanntmachung des Hinweises auf die Patenterteilung: **06.10.2021**
(21) Anmeldenummer: 19211488.2
(22) Anmeldetag: 26.11.2019
(51) Int. Cl.: B23Q 7/14, F16H 55/16, F16H 55/18

(54) **TRIEBSTOCKANTRIEB**
DRIVE-ROD DRIVE AND WORKPIECE TRANSFER DEVICE AND MACHINE ARRANGEMENT FOR MACHINING WORKPIECES WITH A DRIVE-ROD DRIVE
DISPOSITIF D'ENTRAÎNEMENT À FUSEAUX AINSI QUE DE TRANSFERT DE PIÈCES ET AGENCEMENT MÉCANIQUE D'USINAGE DE PIÈCES DOTÉES RESPECTIVEMENT D'UN ENTRAÎNEMENT À FUSEAUX

(30) Priorität: 17.12.2018 DE 102018221965
(43) Veröffentlichungstag der Anmeldung: 24.06.2020
(73) Patentinhaber: TRUMPF Werkzeugmaschinen GmbH + Co. KG, 71254 Ditzingen (DE)
(72) Erfinder: SJÖDIN, Niclas, 02625 Bautzen (DE); PROTZE, Christoph, 01904 Ringerhain (DE); KNOBEL, Carsten, 02681 Wilthen (DE); WOWTSCHERK, Patrick, 02699 Neschwitz (DE)
(74) Vertreter: Kohler Schmid Möbus Patentanwälte

(56) Entgegenhaltungen:
- CH-A2- 712 143
- DE-A1-102015 220 185
- US-B2- 9 222 569

## Beschreibung

Die Erfindung betrifft einen Triebstockantrieb mit einem Triebstock und mit einem Antriebszahnrad, wobei der Triebstock und das Antriebszahnrad mit einer in einer Vorschubrichtung ausgeführten translatorischen Bewegung relativ zueinander bewegbar sind,
- indem der Triebstock Triebstockbolzen aufweist, die unter Ausbildung von Bolzenzwischenräumen an einer Triebstockstange vorgesehen und in der Vorschubrichtung einander benachbart sind, wobei die Bolzenzwischenräume in der Vorschubrichtung gesehen eine Zwischenraumweite aufweisen und
- indem das Antriebszahnrad mittels eines Antriebsmotors um eine in Querrichtung der Vorschubrichtung verlaufende Zahnradachse mit einer Drehbewegung in einer Drehrichtung antreibbar ist, die in Umfangsrichtung des Antriebszahnrads verläuft und indem das Antriebszahnrad einen Zahnradgrundkörper sowie eine an dem Zahnradgrundkörper vorgesehene Stirnverzahnung aufweist mit Zähnen, die unter Ausbildung von Zahnzwischenräumen in Umfangsrichtung des Antriebszahnrads einander benachbart sind und die in der Umfangsrichtung gesehen eine Zahndicke aufweisen, die ihrerseits durch zwei in Umfangsrichtung einander mit gegenseitigem Abstand benachbarte Zahnflanken begrenzt ist,
wobei zur Erzeugung der translatorischen Bewegung die Zähne des sich in der Drehrichtung drehenden Antriebszahnrads in die Bolzenzwischenräume an dem Triebstock einlaufen und die Triebstockbolzen mit derjenigen der Zahnflanken beaufschlagen, die in der Drehrichtung voreilt, während die andere der Zahnflanken als in der Drehrichtung nacheilende Zahnflanke vorgesehen ist.

Die Erfindung betrifft des Weiteren eine Werkstück-Transfervorrichtung und eine maschinelle Anordnung zum Bearbeiten von Werkstücken, insbesondere von Blechen, mit einem zwischen einer stationären Vorrichtungseinheit und einem Werkstückträger der Werkstück-Transfervorrichtung vorgesehenen Triebstockantrieb der vorgenannten Art.

Gattungsgemäßer Stand der Technik ist bekannt aus DE 10 2015 220 185 A1.

Diese Druckschrift offenbart eine vorzugsweise für die Blechbearbeitung vorgesehene Werkzeugmaschine mit einem Arbeitsbereich und mit einer Werkstück-Transfervorrichtung. Mit Vorschubbewegungen wird eine mit einem Werkstück beladene Werkstückpalette mittels der Werkstück-Transfervorrichtung zur Werkstückbearbeitung in den Arbeitsbereich der Werkzeugmaschine bewegt und im Anschluss an die Werkstückbearbeitung aus dem Arbeitsbereich der Werkzeugmaschine abgeführt. Als Vorschubantrieb für die Werkstückpalette dient ein herkömmlicher Triebstockantrieb mit einem an der Werkstückpalette montierten Triebstock und mit einem Antriebszahnrad, das gemeinsam mit dem das Antriebszahnrad antreibenden Motor an einem stationären Ständer der Werkstück-Transfervorrichtung angebracht ist. Zur Erzeugung der Vorschubbewegungen der Werkstückpalette greift das angetrieben umlaufende Antriebszahnrad des Triebstockantriebs mit seinen Zähnen in Bolzenzwischenräume zwischen Triebstockbolzen des Triebstocks ein.

An einem Triebstockantrieb herkömmlicher Bauart sind die gegenseitigen Abstände der Triebstockbolzen und/oder die Dicke der in die Bolzenzwischenräume der Triebstockbolzen eingreifenden Zähne des Antriebszahnrads grob toleriert. Daher sind die mit einem herkömmlichen Triebstockantrieb erzeugten Vorschubbewegungen spielbehaftet und folglich verhältnismäßig unruhig und ungenau.

Die Erzeugung spielfreier, gleichförmiger und entsprechend genauer Vorschubbewegungen mittels eines Triebstockantriebs zu ermöglichen, ist Aufgabe der vorliegenden Erfindung.

Erfindungsgemäß gelöst wird diese Aufgabe durch den Triebstockantrieb gemäß Patentanspruch 1, durch die Werkstück-Transfervorrichtung gemäß Patentanspruch 12 und durch die maschinelle Anordnung zum Bearbeiten von Werkstücken gemäß Patentanspruch 13.

Im Falle der Erfindung umfasst ein Triebstockantrieb ein Antriebszahnrad mit Zähnen, die eine adaptive Zahndicke aufweisen und deren Dicke sich folglich an wechselnde Abstände einander benachbarter Triebstockbolzen des mit dem Antriebszahnrad zusammenwirkenden Triebstocks anpassen kann. Zu diesem Zweck sind die Zähne des Antriebszahnrads jeweils unter Ausbildung eines starren Zahnteils und eines beweglichen Zahnteils geteilt, wobei der starre Zahnteil und der bewegliche Zahnteil jeweils eine der beiden Zahnflanken ausbilden, welche die Zahndicke des betreffenden Zahns begrenzen. Die Teilung der Zähne des Antriebszahnrads ist vorzugsweise unter Ausbildung einer radialen Trennfuge zwischen dem starren und dem beweglichen Zahnteil ausgeführt.

Der starre Zahnteil der Zähne des Antriebszahnrads ist in Umfangsrichtung des Antriebszahnrads starr mit der Nabe beziehungsweise dem Zahnradgrundkörper des Antriebszahnrads verbunden. Der bewegliche Zahnteil kann sich jeweils unter Veränderung der Zahndicke relativ zu dem zugeordneten starren Zahnteil in Umfangsrichtung des Antriebszahnrads bewegen. Mittels einer Stellvorrichtung ist der bewegliche Zahnteil gegenüber dem zugehörigen starren Zahnteil zustellbar. Dadurch lässt sich die Dicke der Zähne an die Weite der Bolzenzwischenräume, in welchen die Zähne an dem Triebstock eingreifen, derart anpassen, dass die Zähne in der Vorschubrichtung spielfrei von den Bolzenzwischenräumen aufgenommen, insbesondere mit dem starren Zahnteil und dem beweglichen Zahnteil gegen die den jeweiligen Bolzenzwischenraum ausbildenden Triebstockbolzen vorgespannt sind. Die beweglichen Zahnteile der Zähne des Antriebszahnrads können mittels der Stellvorrichtung mit rotatorischen Bewegungen gegenüber den zugehörigen starren Zahnteilen zugestellt werden. Die schwenkbeweglichen Zahnteile sind um eine parallel zu der Zahnradachse des Antriebszahnrads verlaufende Schwenkachse schwenkbar an dem Zahnradgrundkörper des Antriebszahnrads und/oder an dem zugehörigen starren Zahnteil gelagert. Die genannte Schwenkachse ist durch ein Drehgelenk ausgebildet, welches an dem beweglichen Zahnteil und an dem Zahnradgrundkörper und/oder dem starren Zahnteil einerseits eine Gelenkpfanne und andererseits einen Gelenkkopf aufweist.

Eine aufgrund der Beweglichkeit des beweglichen Zahnteils relativ zu dem starren Zahnteil einstellbare maximale Zahndicke der Zähne des Antriebszahnrads ist wenigstens so groß wie eine maximale Zwischenraumweite der Bolzenzwischenräume an dem Triebstock. Eine in entsprechender Weise einstellbare minimale Zahndicke der Zähne des Antriebszahnrads ist nicht größer als eine minimale Zwischenraumweite der Bolzenzwischenräume an dem Triebstock. Greifen mehrere Zähne des Antriebszahnrads gleichzeitig in den Triebstock ein, so können sich die im Eingriff befindlichen Zähne hinsichtlich ihrer Zahndicke unabhängig voneinander an die Zwischenraumweite der von den Zähnen auszufüllenden Bolzenzwischenräume anpassen. Der Betrag der Kraft, mit welcher ein beweglicher Zahnteil eines in einen Bolzenzwischenraum eingreifenden Zahns des Antriebszahnrads mittels der Stellvorrichtung auf Abstand von dem zugehörigen starren Zahnteil gehalten wird, ist derart bemessen, dass der bewegliche Zahnteil seinen Sollabstand von dem starren Zahnteil unter der Wirkung der bei der Vorschubbewegung an dem beweglichen Zahnteil und an dem staren Zahnteil auftretenden Kräfte beibehält.

Besondere Ausführungsarten des Triebstockantriebs gemäß Patentanspruch 1, der Werkstück-Transfervorrichtung gemäß Patentanspruch 12 und der maschinellen Anordnung gemäß Patentanspruch 13 ergeben sich aus den abhängigen Patentansprüchen 2 bis 11.

Im Falle der Erfindungsbauart gemäß Patentanspruch 2 sind die Triebstockbolzen drehbar an der Triebstockstange des Triebstocks gelagert. Durch die drehbare Lagerung der Triebstockbolzen werden die Kräfte, die zwischen der Triebstockstange und den Triebstockbolzen im Betrieb wirksam sind, minimiert.

Für die Ausgestaltung der Stellvorrichtung zur Positionierung des beweglichen Zahnteils eines Zahns des Antriebszahnrads gegenüber dem zugehörigen starren Zahnteil bieten sich erfindungsgemäß unterschiedliche Möglichkeiten, die einander ergänzend oder alternativ vorgesehen sein können.

Als konstruktiv besonders einfache Lösung ist ausweislich Patentanspruch 3 eine Stellvorrichtung mit einem Federelement realisiert, das in Umfangsrichtung des Antriebszahnrads gesehen zwischen dem jeweiligen starren Zahnteil und dem jeweiligen beweglichen Zahnteil wirksam ist und das eine Rückstellkraft erzeugt, wenn sich der bewegliche Zahnteil in Richtung auf den zugeordneten starren Zahnteil bewegt. Ist die Zwischenraumweite eines Bolzenzwischenraums an dem Triebstock kleiner als die maximale Dicke eines Zahns des Antriebszahnrads, die bei Ausgangszustand des Federelements vorliegt, so sind die in den Bolzenzwischenraum eingelaufenen Zähne des Antriebszahnrads aufgrund der dann von dem Federelement erzeugten Rückstellkraft mit dem starren Zahnteil und dem beweglichen Zahnteil gegen die den Bolzenzwischenraum ausbildenden Triebstockbolzen des Triebstocks vorgespannt.

Anstelle eines Federelements oder zusätzlich dazu ist im Falle der Erfindungsbauart gemäß Patentanspruch 8 zur Positionierung des beweglichen Zahnteils gegenüber dem starren Zahnteil der Zähne des Antriebszahnrads eine Stellvorrichtung mit einer gesteuert betätigbaren Kolben-Zylinder-Anordnung vorgesehen, die einerseits an dem betreffenden starren Zahnteil und andererseits an dem zugeordneten beweglichen Zahnteil angreift. Denkbar sind dabei insbesondere pneumatische und hydraulische Kolben-Zylinder-Anordnungen.

Ist die Kolben-Zylinder-Anordnung mit einer Kolbenstange an einen der Zahnteile angebunden, so kann die Ausfahrlänge der Kolbenstange derart gewählt werden, dass der bewegliche Zahnteil und der starre Zahnteil an dem in einen Bolzenzwischenraum eingelaufenen Zahn die gewünschte Relativlage einnehmen. Durch eine entsprechende Regelung des den Kolben im Innern des Zylinders der Kolben-Zylinder-Anordnung beaufschlagenden Drucks kann die Zahndicke und gegebenenfalls der Betrag der Vorspannung des starren Zahnteils und des beweglichen Zahnteils gegen die den Zahnteilen benachbarten Triebstockbolzen derart bemessen werden, dass ein spielfreier Eingriff des Zahns in den Bolzenzwischenraum ungeachtet der Kräfte erhalten bleibt, die im Betrieb zwischen den Triebstockbolzen und den mit diesen in Kontakt befindlichen Zahnteilen der Zähne des Antriebszahnrads auftreten. In bevorzugter Ausgestaltung der Erfindung wird der Druck, der auf den Kolben der Kolben-Zylinder-Einheit der Stellvorrichtung wirkt, variabel und in Abhängigkeit von der konkreten Betriebssituation bemessen.

Neben den bevorzugten Stellvorrichtungen mit Federelementen und Kolben-Zylinder-Anordnungen kommen erfindungsgemäß als Stellvorrichtungen beispielsweise auch zwischen dem beweglichen Zahnteil und dem starren Zahnteil der Zähne des Antriebszahnrads wirksame Piezoelemente und/oder Magnete in Frage.

Bauarten des erfindungsgemäßen Triebstockantriebs mit einer Stellvorrichtung mit Federelement zur Positionierung des beweglichen Zahnteils gegenüber dem starren Zahnteil der Zähne des Antriebszahnrads weisen in weiterer bevorzugter Ausgestaltung der Erfindung die Merkmale wenigstens eines der Patentansprüche 4 bis 7 auf.

Ausweislich Patentanspruch 4 erfolgt die mit der Erzeugung einer hinreichend großen Rückstellkraft verbundene Zustellung des beweglichen Zahnteils gegenüber dem starren Zahnteil der Zähne des Antriebszahnrads selbsttätig beim Einlaufen der Zähne des Antriebszahnrads in die Bolzenzwischenräume an dem Triebstock.

Gemäß Patentanspruch 5 ist im Interesse einer konstruktiv einfachen und platzsparenden Bauweise des Antriebszahnrads eine Stellvorrichtung mit einem Elastomer als Federelement vorgesehen. Anstelle eines Elastomers oder zusätzlich dazu kann beispielsweise auch ein Federelement in Form einer Tellerfeder und/oder in Form einer Schraubenfeder und/oder in Form einer Drehstabfeder und/oder in Form einer Gasdruckfeder verwendet werden. Generell kann es sich bei dem Federelement der Stellvorrichtung um eine Zug- aber auch um eine Druckfeder handeln.

Zur Gewährleistung einer maximalen Funktionssicherheit ist im Falle der Erfindungsbauart gemäß Patentanspruch 6 an dem beweglichen Zahnteil und/oder an dem starren Zahnteil für das Federelement der Zustellvorrichtung eine in besonderer Weise gestaltete Lagerstelle vorgesehen, die für eine dauerhaft definierte Anordnung des Federelements sorgt.

Ausweislich Patentanspruch 7 weist in weiterer Ausgestaltung der Erfindung einer der Zahnteile eines Zahns des Antriebszahnrads als Lagerstelle für das Federelement eine Aussparung auf, welche das Federelement aufnimmt. An dem anderen Zahnteil des Zahns ist ein Vorsprung vorgesehen, der zu dem Federelement an dem mit der Aussparung versehenen Zahnteil hin vorsteht. Der Vorsprung an dem betreffenden Zahnteil kann die Zahnteile bei Relativbewegungen zur Anpassung der Zahndicke an die Zwischenraumweite von Bolzenzwischenräumen aneinander führen. Das Federelement ist in einem konstruktiv einfachen Fall in die Aussparung an dem betreffenden Zahnteil eingelegt. Ein als Federelement vorgesehenes Elastomer kann dabei leicht komprimiert sein und ist dann unter der Wirkung der auftretenden elastischen Rückstellkraft selbsttätig in der Aussparung fixiert.

Erfindungsgemäß bevorzugte Möglichkeiten zur schwenkbaren Lagerung der beweglichen Zahnteile an dem Zahnradgrundkörper des Antriebszahnrads und/oder an dem zugehörigen starren Zahnteil ergeben sich aus den Patentansprüchen 9 bis 11. Diese Erfindungsbauarten zeichnen sich durch eine besonders einfache konstruktive Gestaltung und/oder durch eine besondere Montagefreundlichkeit aus.

Nachfolgend wir die Erfindung anhand beispielhafter schematischer Darstellungen näher erläutert.

Es zeigen:
- Figur 1: eine maschinelle Anordnung für die Blechbearbeitung mit einer Werkstückpalette am Eingang eines Arbeitsbereichs einer Bearbeitungsvorrichtung und mit einem Triebstockantrieb für die Werkstückpalette,
- Figur 2: ein Detail des Triebstockantriebs gemäß Figur 1,
- Figur 3: ein Antriebszahnrad für den Triebstockantrieb gemäß den Figuren 1 und 2 mit beidseitigen Zahnradabdeckungen,
- Figur 4: das Antriebszahnrad gemäß Figur 3 ohne die Zahnradabdeckungen,
- Figuren 5a und 5b: alternative Bauarten des Antriebszahnrads für den Triebstockantrieb gemäß den Figuren 1 und 2 und
- Figuren 6a, 6b, 6c: Darstellungen zur Veranschaulichung der Funktionsweise des Triebstockantriebs gemäß den Figuren 1 und 2.

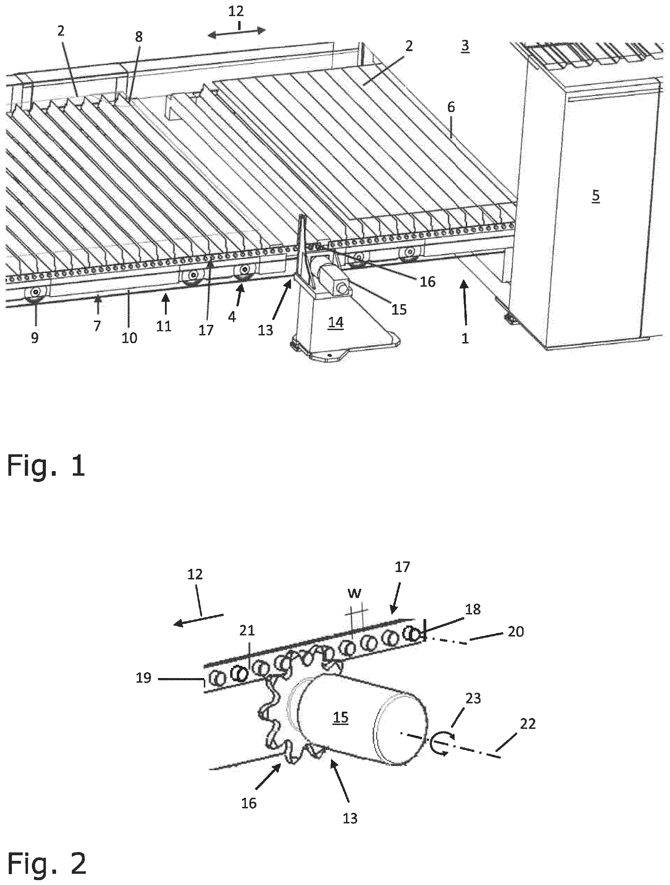

Gemäß Figur 1 umfasst eine maschinelle Anordnung 1 für die trennende Bearbeitung von in Figur 1 transparent dargestellten Blechen 2 als Bearbeitungsvorrichtung eine herkömmliche Laserflachbettmaschine 3 sowie eine Werkstück-Transfervorrichtung 4.

Von der Laserflachbettmaschine 3 ist in Figur 1 eine Einhausung 5 zu erkennen, die einen im Inneren der Einhausung 5 vorgesehenen Arbeitsbereich der Laserflachbettmaschine 3 begrenzt. In dem Arbeitsbereich ist in gewohnter Weise ein Laserschneidkopf der Laserflachbettmaschine 3 zur Blechbearbeitung in einer horizontalen Ebene zweiachsig verfahrbar. Die Verfahrbewegungen führt der Laserschneidkopf zu Bearbeitungszwecken relativ zu einem in dem Arbeitsbereich der Laserflachbettmaschine 3 stationär gelagerten Blech 2 aus.

Stirnseitig ist die Einhausung 5 mit einer Ein- und Ausschleusöffnung 6 versehen. Mit Vorschubbewegungen durch die Ein- und Ausschleusöffnung 6 werden Bleche 2 zur Bearbeitung in den Arbeitsbereich der Laserflachbettmaschine 3 bewegt und nach der trennenden Bearbeitung aus dem Arbeitsbereich der Laserflachbettmaschine 3 abgeführt.

Zur Erzeugung der Vorschubbewegungen dient die Werkstück-Transfervorrichtung 4.

Diese umfasst als Werkstückträger eine Werkstückpalette 7 mit Auflageleisten 8, auf denen Bleche 2 vor, während und nach ihrer Bearbeitung gelagert sind. Die Werkstückpalette 7 ist mit Führungsrollen 9 versehen und mittels der Führungsrollen 9 an Führungsschienen 10 einer stationären Führungsstruktur 11 der Werkstück-Transfervorrichtung 4 in einer durch einen Doppelpfeil 12 veranschaulichten Vorschubrichtung 12 geführt.

Zur Ausführung von Bewegungen in der Vorschubrichtung 12 wird die Werkstückpalette 7 mit den darauf abgelegten Blechen 2 mittels eines Triebstockantriebs 13 der Werkstück-Transfervorrichtung 4 angetrieben.

An einem als stationäre Vorrichtungseinheit vorgesehenen Ständer 14 der Werkstück-Transfervorrichtung 4 ist ein gesteuert betätigbarer elektrischer Antriebsmotor 15 des Triebstockantriebs 13 montiert. Auf der Motorwelle des Antriebsmotors 15 sitzt ein in Figur 1 lediglich andeutungsweise erkennbares Antriebszahnrad 16 des Triebstockantriebs 13. Das Antriebszahnrad 16 greift in einen Triebstock 17 des Triebstockantriebs 13 ein. Der Triebstock 17 ist an der Werkstückpalette 7 befestigt und erstreckt sich mit seiner Längsrichtung in der Vorschubrichtung 12.

Im Detail ist der Eingriff des Antriebszahnrads 16 in den Triebstock 17 in Figur 2 dargestellt.

Der Triebstock 17 weist Triebstockbolzen 18 auf, die an einer Triebstockstange 19 um eine Bolzenachse 20 drehbar gelagert sind. Einander in der Vorschubrichtung 12 benachbarte Triebstockbolzen 18 bilden jeweils einen Bolzenzwischenraum 21 aus, der in der Vorschubrichtung 12 gesehen eine Zwischenraumweite w aufweist. Aufgrund montagebedingter Toleranzen besitzen die Bolzenzwischenräume 21 an dem Triebstock 17 keine einheitliche Zwischenraumweite.

Das Antriebszahnrad 16 ist mittels des Antriebsmotors 15 um eine in Querrichtung der Vorschubrichtung 12 verlaufende Zahnradachse 22 in einer durch einen Doppelpfeil 23 veranschaulichten Drehrichtung antreibbar. In Abhängigkeit von dem Drehsinn des Antriebszahnrads 16 des Triebstockantriebs 13 werden der Triebstock 17 und die mit diesem verbundene Werkstückpalette 7 mit einer translatorischen Vorschubbewegung in den Arbeitsbereich der Laserflachbettmaschine 3 hinein- oder aus dem Arbeitsbereich der Laserflachbettmaschine 3 herausbewegt.

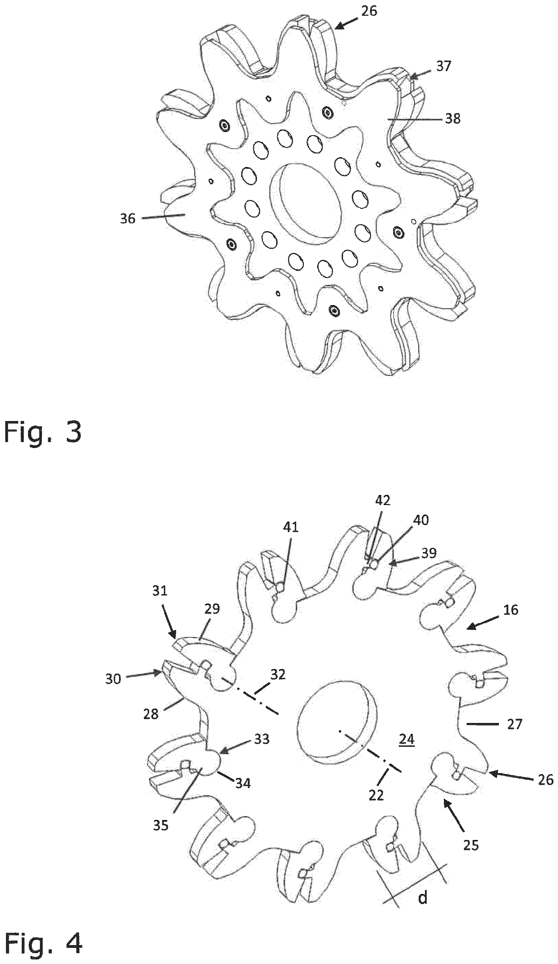

Wie insbesondere Figur 4 entnommen werden kann, weist das Antriebszahnrad 16 des Triebstockantriebs 13 einen Zahnradgrundkörper 24 auf, der mit einer Stirnverzahnung 25 versehen ist. Die Stirnverzahnung 25 wird von Zähnen 26 gebildet, die unter Ausbildung von Zahnzwischenräumen 27 in Umfangsrichtung des Antriebszahnrads 16 aufeinander folgen.

In Umfangsrichtung des Antriebszahnrads 16 gesehen besitzen die Zähne 26 des Antriebszahnrads 16 eine Zahndicke d, die durch zwei Zahnflanken 28, 29 begrenzt wird.

Die Zähne 26 sind unter Ausbildung einer in radialer Richtung des Antriebszahnrads 16 verlaufenden Trennfuge geteilt und umfassen einen starren Zahnteil 30, der einstückig mit dem Zahnradgrundkörper 24 ausgebildet und folglich mit dem Zahnradgrundkörper 24 starr verbunden ist sowie einen beweglichen Zahnteil 31, der im Bereich des Zahnfußes an dem Zahnradgrundkörper 24 um eine parallel zu der Zahnradachse 22 verlaufende Schwenkachse 32 schwenkbeweglich gelagert ist.

Aufgrund der radialen Teilung und aufgrund der schwenkbaren Lagerung des beweglichen Zahnteils 31 an dem Zahnradgrundkörper 24 weisen die Zähne 26 des Antriebszahnrads 16 eine adaptive Zahndicke d auf. Bei von dem zugehörigen starren Zahnteil 30 maximal abgespreiztem beweglichem Zahnteil 31 besitzen die Zähne 26 eine maximale Zahndicke d. Eine minimale Zahndicke d der Zähne 26 ergibt sich dann, wenn der starre Zahnteil 30 und der bewegliche Zahnteil 31 an ihren einander zugewandten Seiten einander maximal angenähert sind. Die maximale Zahndicke d ist in dem vorliegenden Beispielsfall größer als die maximale Zwischenraumweite, die an dem Triebstock 17 auftritt. Bei einander maximal angenäherten Zahnteilen 30, 31 können die Zähne 26 des Antriebszahnrads 16 von jedem der Bolzenzwischenräume 21 an dem Triebstock 17 aufgenommen werden.

Die Schwenkachse 32 eines jeden beweglichen Zahnteils 31 des Antriebszahnrads 16 wird durch ein Drehgelenk 33 definiert, das von einer Gelenkpfanne 34 an dem Zahnradgrundkörper 24 und einem Gelenkkopf 35 an dem beweglichen Zahnteil 31 gebildet ist. Die Gelenkpfanne 34 an dem Zahnradgrundkörper 24 übergreift den Gelenkkopf 35 an dem beweglichen Zahnteil 31 derart, dass der bewegliche Zahnteil 31 Schwenkbewegungen um die Schwenkachse 32 ausführen kann und gleichzeitig in radialer Richtung der Schwenkachse 32 in der Gelenkpfanne 34 gehalten ist.

Die Gelenkpfanne 34 an dem Zahnradgrundkörper 24 weist eine rinnenförmige hohlzylindrische Gestalt auf. Als in die Gelenkpfanne 34 eingreifendes Gegenstück ist der Gelenkkopf 35 an dem beweglichen Zahnteil 31 gleichfalls zylindrisch ausgebildet.

Aufgrund der beiderseitigen Bauteilgeometrie im Bereich des Drehgelenks 33 kann der bewegliche Zahnteil 31 zur Montage an dem Zahnradgrundkörper 24 auf einfache Art und Weise mit dem Gelenkkopf 35 längs der Schwenkachse 32 in die zugeordnete Gelenkpfanne 34 an dem Zahnradgrundkörper 24 eingesteckt werden. Zur Sicherung des beweglichen Zahnteils 31 in Einbaulage an dem Zahnradgrundkörper 24 dienen plattenartige Abdeckungen 36, 37, die in Figur 3 zu erkennen sind. Die plattenartigen Abdeckungen 36, 37 liegen auf den beiden in axialer Richtung gelegenen ebenen Seitenflächen des Zahnradgrundkörpers 24 auf und sind mit dem Zahnradgrundkörper 24 verschraubt. Die Schwenkbeweglichkeit der beweglichen Zahnteile 31 wird durch die plattenartigen Abdeckungen 36, 37 nicht beeinträchtigt. An den plattenartigen Abdeckungen 36, 37 vorgesehene radiale Vorsprünge 38 sind auf Höhe der Zähne 26 des Antriebszahnrads 16 angeordnet und dabei kleiner dimensioniert als die Zähne 26. Insbesondere die minimale Zahndicke der Zähne 26 übersteigt die entsprechenden Abmessungen der radialen Vorsprünge 38 an den plattenartigen Abdeckungen 36, 37.

Zwischen dem beweglichen Zahnteil 31 und dem starren Zahnteil 30 ist eine Stellvorrichtung 39 vorgesehen, mittels derer der bewegliche Zahnteil 31 relativ zu dem starren Zahnteil 30 in Umfangsrichtung des Antriebszahnrads 16 zustellbar ist.

Die in den Figuren 3 und 4 gezeigte Bauart des Antriebszahnrads 16 weist eine Stellvorrichtung 39 mit einem Federelement in Form eines Elastomers 40 auf.

Das Elastomer 40 ist in einer als Lagerstelle vorgesehenen Aussparung 41 an dem beweglichen Zahnteil 31 der Zähne 26 des Antriebszahnrads 16 aufgenommen. Die Aussparung 41 ist als längs der Schwenkachse 32 des beweglichen Zahnteils 31 durchgängige Nut ausgebildet. Der Aussparung 41 des beweglichen Zahnteils 31 liegt ein an dem starren Zahnteil 30 vorgesehener Vorsprung 42 gegenüber. Bei einer entsprechenden äußeren Beaufschlagung der Zahnflanke 28 an dem starren Zahnteil 30 und/oder der Zahnflanke 29 an dem beweglichen Zahnteil 31 führt der bewegliche Zahnteil 31 relativ zu dem starren Zahnteil 30 eine Schwenkbewegung um die Schwenkachse 32 aus. Aufgrund der Schwenkbewegung des beweglichen Zahnteils 31 wird das in die Aussparung 41 eingelegte Elastomer 40 durch den Vorsprung 42 an dem starren Zahnteil 30 beaufschlagt und unter Erzeugung einer elastischen Rückstellkraft komprimiert. Bei anschließender Entlastung des starren Zahnteils 30 und/oder des beweglichen Zahnteils 31 bewirkt die von dem Elastomer 40 ausgeübte Rückstellkraft eine Bewegung, mit welcher der bewegliche Zahnteil 31 relativ zu dem starren Zahnteil 30 zugestellt wird, wobei der bewegliche Zahnteil 31 eine von dem starren Zahnteil 30 weg gerichtete Schwenkbewegung ausführt.

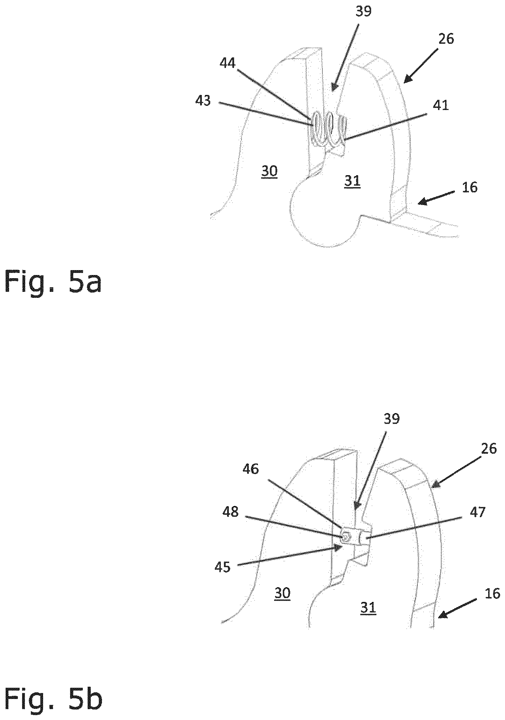

Eine in Figur 5a gezeigte Bauart des Antriebszahnrads 16 des Triebstockantriebs 13 stimmt mit der Zahnradbauart gemäß den Figuren 3 und 4 weitgehend überein.

Das Antriebszahnrad 16 gemäß Figur 5a unterscheidet sich von dem Antriebszahnrad 16 gemäß den Figuren 3 und 4 im Wesentlichen dadurch, dass als Federelement einer Stellvorrichtung 39 kein Elastomer 40 sondern eine Schraubenfeder 43 vorgesehen ist. Für die Schraubenfeder 43 ist zusätzlich zu einer nutförmigen Aussparung 41 an dem beweglichen Zahnteil 31 auch an dem starren Zahnteil 30 eine Lagerstelle vorgesehen. Die Lagerstelle für die Schraubenfeder 43 an dem starren Zahnteil 30 ist als sacklochartige Aussparung 44 ausgebildet.

Abweichend von dem Antriebszahnrad 16 gemäß den Figuren 3, 4 und auch abweichend von dem Antriebszahnrad 16 gemäß Figur 5a weist eine Stellvorrichtung 39 des Antriebszahnrads 16 gemäß Figur 5b zur Erzeugung einer Bewegung des beweglichen Zahnteils 31 relativ zu dem starren Zahnteil 30 kein Federelement sondern vielmehr eine gesteuert betätigbare Kolben-Zylinder-Anordnung 45 auf. Mit einem Zylinder 46 ist die Kolben-Zylinder-Anordnung 45 an dem starren Zahnteil 30 angebracht. Eine an dem Zylinder 46 geführte Kolbenstange 47 ist mit ihrem von dem Zylinder 46 abliegenden Ende an dem beweglichen Zahnteil 31 befestigt.

Über einen Druckmittelanschluss 48 ist der Zylinder 46 an eine nicht gezeigte Druckmittelquelle, in dem vorliegenden Beispielsfall an einen hydraulischen Druckspeicher, angeschlossen.

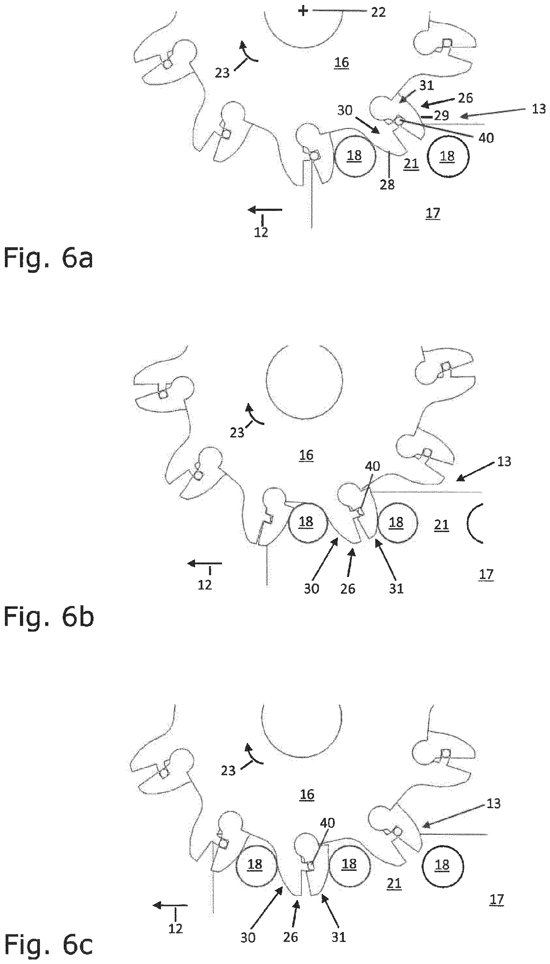

Die Funktionsweise des Triebstockantriebs 13 ist in den Figuren 6a, 6b, 6c veranschaulicht.

Das Antriebszahnrad 16 des Triebstockantriebs 13 wird mittels des Antriebsmotors 15 in der Drehrichtung 23 im Uhrzeigersinn um die Zahnradachse 22 angetrieben. Ein Zahn 26 des Antriebszahnrads 16 beaufschlagt mit der in der Drehrichtung 23 voreilenden Zahnflanke 28 des starren Zahnteils 30 einen Triebstockbolzen 18 des Triebstocks 17 in der in den Figuren 6a, 6b, 6c nach links gerichteten Vorschubrichtung 12. Der dem starren Zahnteil 30 in der Drehrichtung 23 des Antriebszahnrads 16 nacheilende bewegliche Zahnteil 31 des betrachteten Zahns 26 ist in Figur 6a noch von dem ihm nächstliegenden Triebstockbolzen 18 des Triebstocks 17 beabstandet. Das Elastomer 40 zwischen dem starren Zahnteil 30 und dem beweglichen Zahnteil 31 ist in Figur 6a unbelastet und der betrachtete Zahn 26 weist folglich seine maximale Zahndicke auf. Die maximale Zahndicke des Zahns 26 ist in dem gezeigten Beispielsfall größer als die Zwischenraumweite des Bolzenzwischenraums 21 zwischen dem von dem starren Zahnteil 30 beaufschlagten Triebstockbolzen 18 und dem Triebstockbolzen 18, welcher dem beweglichen Zahnteil 31 am nächsten liegt.

Infolge der Drehbewegung des Antriebszahnrads 16 läuft der bewegliche Zahnteil 31 des betrachteten Zahns 26 mit seiner Zahnflanke 29 auf den im nächstliegenden Triebstockbolzen 18 auf. Bei fortgesetzter Drehbewegung des Antriebszahnrads 16 wird der bewegliche Zahnteil 31 durch den ihm nächstliegenden Triebstockbolzen 18 beaufschlagt und infolgedessen in Richtung auf den starren Zahnteil 30 geschwenkt. Im Laufe der Drehbewegung des Antriebszahnrads 16 in der Drehrichtung 23 ergeben sich an dem Triebstockantrieb 13 unter anderem die Betriebszustände gemäß den Figuren 6b, 6c, im Falle derer der betrachtete Zahn 26 in den zugeordneten Bolzenzwischenraum 21 eingreift.

An dem in den zugeordneten Bolzenzwischenraum 21 eingelaufenen Zahn 26 ist das Elastomer 40 komprimiert. Das Elastomer 40 übt folglich eine Rückstellkraft aus, aufgrund derer der starre Zahnteil 30 und der bewegliche Zahnteil 31 relativ zueinander derart zugestellt sind, dass der starre Zahnteil 30 und der bewegliche Zahnteil 31 gegen den jeweils unmittelbar benachbarten Triebstockbolzen 18 vorgespannt sind. Infolgedessen ist der betrachtete Zahn 26 in dem zugeordneten Bolzenzwischenraum 21 in der Vorschubrichtung 12 spielfrei aufgenommen.

Die von dem Elastomer 40 ausgeübte Rückstellkraft, welche den starren Zahnteil 30 und den beweglichen Zahnteil 31 des betrachteten Zahns 26 spreizt, ist betragsmäßig größer als die der Spreizung des starren Zahnteils 30 und des beweglichen Zahnteils 31 betriebsbedingt entgegenwirkenden Kräfte.

Die Vorspannung des starren Zahnteils 30 und des beweglichen Zahnteils 31 des betrachteten Zahns 26 gegen die benachbarten Triebstockbolzen 18 bleibt wenigstens solange erhalten, bis ein auf den betrachteten Zahn 26 folgender Zahn 26 des Antriebszahnrads 16 in einen weiteren Bolzenzwischenraum 21 an dem Triebstock 17 eingreift und mit seinem starren Zahnteil 30 und seinem beweglichen Zahnteil 31 gegen die den weiteren Bolzenzwischenraum 21 ausbildenden Triebstockbolzen 18 vorgespannt ist.

Jeder in einen Bolzenzwischenraum 21 an dem Triebstock 17 einlaufende Zahn 26 des Antriebszahnrads 16 passt seine Zahndicke in der beschriebenen Weise an die Zwischenraumweite des den Zahn 26 jeweils aufnehmenden Bolzenzwischenraums 21 an. Schwankungen der Zwischenraumweite werden durch Ausgleichs-Stellbewegungen der beweglichen Zahnteile 31 relativ zu dem jeweils zugehörigen starren Zahnteil 30 kompensiert.

Das Antriebszahnrad 26 erzeugt daher im Zusammenwirken mit dem Triebstock 17 eine spielfreie Vorschubbewegung des Triebstocks 17 und der mit dem Triebstock 17 verbundenen Werkstückpalette 7 in der Vorschubrichtung 12.

Wird abweichend von den in den Figuren 6a, 6b ,6c dargestellten Verhältnissen ein Antriebszahnrad 16 verwendet, an welchem zwischen dem starren Zahnteil 30 und dem beweglichen Zahnteil 31 kein Federelement sondern vielmehr eine Kolben-Zylinder-Anordnung 45 der in Figur 5b gezeigten Art vorgesehen ist, so wird die Vorspannung des starren Zahnteils 30 und des beweglichen Zahnteils 31 gegen die diesen benachbarten Triebstockbolzen 18 mittels des hydraulischen Druckspeichers erzeugt, an welchen der Zylinder 46 der Kolben-Zylinder-Anordnung 45 angeschlossen ist.

## Patentansprüche

1. Triebstockantrieb mit einem Triebstock (17) und mit einem Antriebszahnrad (16), wobei der Triebstock (17) und das Antriebszahnrad (16) mit einer in einer Vorschubrichtung (12) ausgeführten translatorischen Bewegung relativ zueinander bewegbar sind,
• indem der Triebstock (17) Triebstockbolzen (18) aufweist, die unter Ausbildung von Bolzenzwischenräumen (21) an einer Triebstockstange (19) vorgesehen und in der Vorschubrichtung (12) einander benachbart sind, wobei die Bolzenzwischenräume (21) in der Vorschubrichtung (12) gesehen eine Zwischenraumweite aufweisen und
• indem das Antriebszahnrad (16) mittels eines Antriebsmotors (15) um eine in Querrichtung der Vorschubrichtung (12) verlaufende Zahnradachse (22) mit einer Drehbewegung in einer Drehrichtung antreibbar ist, die in Umfangsrichtung des Antriebszahnrads (16) verläuft und indem das Antriebszahnrad (16) einen Zahnradgrundkörper (24) sowie eine an dem Zahnradgrundkörper (24) vorgesehene Stirnverzahnung (25) aufweist mit Zähnen (26), die unter Ausbildung von Zahnzwischenräumen (27) in Umfangsrichtung des Antriebszahnrads (26) einander benachbart sind und die in Umfangsrichtung gesehen eine Zahndicke aufweisen, die ihrerseits durch zwei in Umfangsrichtung einander mit gegenseitigem Abstand benachbarte Zahnflanken (28, 29) begrenzt ist,
wobei zur Erzeugung der translatorischen Bewegung die Zähne (26) des sich in der Drehrichtung drehenden Antriebszahnrads (16) in die Bolzenzwischenräume (21) an dem Triebstock (17) einlaufen und die Triebstockbolzen(18) mit derjenigen der Zahnflanken (28, 29) beaufschlagen, die in der Drehrichtung voreilt, während die andere der Zahnflanken (28, 29) als in der Drehrichtung nacheilende Zahnflanke (28, 29) vorgesehen ist,
**dadurch gekennzeichnet,**
**dass** die Zähne (26) des Antriebszahnrads (16) eine adaptive Zahndicke aufweisen,
• indem die Zähne (26) des Antriebszahnrads (16) geteilt sind unter Ausbildung eines starren Zahnteils (30) sowie eines beweglichen Zahnteils (31), wobei an dem starren Zahnteil (30) und an dem beweglichen Zahnteil (31) jeweils eine der Zahnflanken (28, 29) vorgesehen ist, welche die Zahndicke des betreffenden Zahns (26) begrenzen,
• indem der starre Zahnteil (30) mit dem Zahnradgrundkörper (24) des Antriebszahnrads (16) in Umfangsrichtung des Antriebszahnrads (16) starr verbunden ist und
• indem der bewegliche Zahnteil (31) relativ zu dem starren Zahnteil (30) in Umfangsrichtung des Antriebszahnrads (16) beweglich und mittels einer Stellvorrichtung (39) zustellbar ist,
• wobei der bewegliche Zahnteil (31) relativ zu dem starren Zahnteil (30) in Umfangsrichtung des Antriebszahnrads (16) beweglich ist, indem der bewegliche Zahnteil (31) an dem Zahnradgrundkörper (24) und/oder an dem starren Zahnteil (30) um eine parallel zu der Zahnradachse (22) des Antriebszahnrads (16) verlaufende Schwenkachse (32) schwenkbeweglich gelagert ist, die durch ein Drehgelenk (33) ausgebildet ist, welches an dem beweglichen Zahnteil (31) und an dem Zahnradgrundkörper (24) und/oder dem starren Zahnteil (30) einerseits eine Gelenkpfanne (34) und andererseits einen Gelenkkopf (35) aufweist,
**dass** die Zähne (26) des Antriebszahnrads (16) aufgrund ihrer Adaptivität eine maximale und eine minimale Zahndicke aufweisen, wobei die maximale Zahndicke wenigstens so groß ist wie eine maximale Zwischenraumweite der Bolzenzwischenräume (21) der Triebstockbolzen (18) an dem Triebstock (17) und wobei die minimale Zahndicke nicht größer ist als eine minimale Zwischenraumweite der Bolzenzwischenräume (21) und
**dass** die Dicke der in die Bolzenzwischenräume (21) der Triebstockbolzen (18) eingelaufenen Zähne (26) mittels der Stellvorrichtung (39) derart einstellbar ist, dass die Zähne (26) in der Vorschubrichtung (12) spielfrei in den Bolzenzwischenräumen (21) aufgenommen sind, insbesondere mit dem starren Zahnteil (30) und dem beweglichen Zahnteil (31) gegen die den jeweiligen Bolzenzwischenraum (21) ausbildenden Triebstockbolzen (18) vorspannbar sind.

2. Triebstockantrieb nach Anspruch 1, **dadurch gekennzeichnet, dass** die Triebstockbolzen (18) um eine Bolzenachse (20) drehbar an der Triebstockstange (19) gelagert sind.

3. Triebstockantrieb nach einem der vorhergehenden Ansprüche, **dadurch gekennzeichnet,**
• **dass** die Stellvorrichtung (39) ein Federelement (40, 43) aufweist, welches in der Umfangsrichtung des Antriebszahnrads (16) gesehen zwischen dem starren Zahnteil (30) und dem beweglichen Zahnteil (31) der Zähne (26) des Antriebszahnrads (16) wirksam ist,
• **dass** der bewegliche Zahnteil (31) gegen die Wirkung einer von dem Federelement (40, 43) erzeugten Rückstellkraft in Richtung auf den starren Zahnteil (30) beweglich ist und
• **dass** die in die Bolzenzwischenräume (21) der Triebstockbolzen (18) eingelaufenen Zähne (26) aufgrund der von dem Federelement (40, 43) erzeugten Rückstellkraft mit dem starren Zahnteil (30) und dem beweglichen Zahnteil (31) gegen die den Bolzenzwischenraum (21) ausbildenden Triebstockbolzen (18) vorspannbar sind.

4. Triebstockantrieb nach Anspruch 3, **dadurch gekennzeichnet, dass** aufgrund einer Beaufschlagung des starren Zahnteils (30) und/oder des beweglichen Zahnteils (31) eines in einen Bolzenzwischenraum (21) einlaufenden Zahns (26) des Antriebszahnrads (16) durch die den Bolzenzwischenraum (21) ausbildenden Triebstockbolzen (18) der bewegliche Zahnteil (31) des Zahns (26) in Richtung auf den zugeordneten starren Zahnteil (30) des Zahns (26) bewegbar und dadurch von dem Federelement (40, 43) die Rückstellkraft erzeugbar ist.

5. Triebstock nach Anspruch 3 oder Anspruch 4, **dadurch gekennzeichnet, dass** als Federelement (40) ein Elastomer vorgesehen ist.

6. Triebstockantrieb nach einem der Ansprüche 3 bis 5, **dadurch gekennzeichnet, dass** an dem starren Zahnteil (30) und/oder an dem beweglichen Zahnteil (31) der Zähne (26) des Antriebszahnrads (16) eine Lagerstelle (41, 44), vorzugsweise eine Aussparung, für das Federelement (40, 43) vorgesehen ist.

7. Triebstockantrieb nach Anspruch 6, **dadurch gekennzeichnet, dass** von dem starren Zahnteil (30) und dem beweglichen Zahnteil (31) der Zähne (26) des Antriebszahnrads (16) einer der Zahnteile (30, 31) als Lagerstelle (41, 44) für das Federelement (40, 43) eine Aussparung aufweist, welche das Federelement (40, 43) aufnimmt und dass an dem anderen Zahnteil (30, 31) ein Vorsprung (42) vorgesehen ist, der an dem betreffenden Zahnteil (30, 31) zu dem Federelement (40, 43) an dem mit der Aussparung versehenen Zahnteil (30, 31) hin vorsteht.

8. Triebstockantrieb nach einem der vorhergehenden Ansprüche, **dadurch gekennzeichnet, dass** die Stellvorrichtung (39) eine gesteuert betätigbare Kolben-Zylinder-Anordnung (45) aufweist, die einerseits an den jeweiligen starren Zahnteil (30) und andererseits an den jeweiligen beweglichen Zahnteil (31) angebunden ist.

9. Triebstockantrieb nach einem der vorhergehenden Ansprüche, **dadurch gekennzeichnet, dass** der Gelenkkopf (35) in radialer Richtung der Schwenkachse (32) des beweglichen Zahnteils (31) in der Gelenkpfanne (34) gehalten ist, indem die Gelenkpfanne (34) den Gelenkkopf (35) zangenartig übergreift.

10. Triebstockantrieb nach einem der vorhergehenden Ansprüche, **dadurch gekennzeichnet, dass** als Drehgelenk (33) ein Scharniergelenk vorgesehen ist mit einem zylindrischen Gelenkkopf (35) und einer mit dem zylindrischen Gelenkkopf (35) koaxialen rinnenförmigen Gelenkpfanne (34), wobei die Achse des zylindrischen Gelenkkopfs (35) und der rinnenförmigen Gelenkpfanne (34) die Schwenkachse (32) des beweglichen Zahnteils (31) ausbildet und parallel zu der Zahnradachse (22) des Antriebszahnrads (16) verläuft.

11. Triebstockantrieb nach Anspruch 10, **dadurch gekennzeichnet, dass** der zylindrische Gelenkkopf (35) und die rinnenförmige Gelenkpfanne (34) in der axialen Richtung ineinander gesteckt sind und dass die rinnenförmige Gelenkpfanne (34) und der von dieser aufgenommene zylindrische Gelenkkopf (35) an wenigstens einer in der axialen Richtung gelegenen Seite mit einer Abdeckung (36, 37) versehen sind, welche mit dem Zahnradgrundkörper (24) und/oder mit dem starren Zahnteil (30) verbunden ist und welche den zylindrischen Gelenkkopf (35) und die rinnenförmige Gelenkpfanne (34) in der axialen Richtung gegen Lösen sichert.

12. Werkstück-Transfervorrichtung mit einem Werkstückträger (7), mit einer stationären Vorrichtungseinheit (14) sowie mit einem zwischen der stationären Vorrichtungseinheit (14) und dem Werkstückträger (7) vorgesehenen Triebstockantrieb (13), der als Antriebskomponenten einen Triebstock (17) und ein Antriebszahnrad (16) aufweist und mittels dessen der Werkstückträger (7) mit einer in einer Vorschubrichtung (12) ausgeführten translatorischen Bewegung relativ zu der stationären Vorrichtungseinheit (14) aus einer Ausgangsposition in eine Zielposition bewegbar ist, wobei eine der Antriebskomponenten des Triebstockantriebs (13) an dem Werkstückträger (7) und die andere Antriebskomponente des Triebstockantriebs (13) an der stationären Vorrichtungseinheit (14) vorgesehen ist, **dadurch gekennzeichnet, dass** als Triebstockantrieb (13) der Triebstockantrieb (13) nach einem der vorhergehenden Ansprüche vorgesehen ist.

13. Maschinelle Anordnung zum Bearbeiten von Werkstücken, insbesondere von Blechen (2), mit einer Bearbeitungsvorrichtung (3), die einen Arbeitsbereich aufweist, in welchem ein Werkstück, insbesondere ein Blech (2), mittels einer Bearbeitungseinheit der Bearbeitungsvorrichtung (3) bearbeitbar ist sowie mit einer Werkstück-Transfervorrichtung (4), mittels derer ein mit einem Werkstück beladener Werkstückträger (7) dem Arbeitsbereich der Bearbeitungsvorrichtung (3) zuführbar und/oder aus dem Arbeitsbereich der Bearbeitungsvorrichtung (3) abführbar ist, **dadurch gekennzeichnet, dass** als Werkstück-Transfervorrichtung (4) die Werkstück-Transfervorrichtung (4) nach Anspruch 12 vorgesehen ist.

## Claims

1. Rack-and-pinion drive comprising a drive rack (17) and comprising a drive pinion (16), the drive rack (17) and the drive pinion (16) being movable relative to one another with a translational movement carried out in a feed direction (12),
• in that the drive rack (17) has drive rack bolts (18) which are provided on a drive rack rod (19) so as to form bolt gaps (21) and are adjacent to one another in the feed direction (12), the bolt gaps (21) having a gap width as seen in the feed direction (12) and
• in that the drive pinion (16) can be driven by means of a drive motor (15) about a pinion axis (22) extending in the transverse direction of the feed direction (12) with a rotary movement in a direction of rotation which extends in the circumferential direction of the drive pinion (16) and in that the drive pinion (16) has a pinion base body (24) and a spur toothing (25) provided on the pinion base body (24) with teeth (26) which are adjacent to one another in the circumferential direction of the drive pinion (26) so as to form tooth gaps (27) and which, as seen in the circumferential direction, have a tooth thickness which in turn is limited by two tooth flanks (28, 29) that are adjacent to one another in the circumferential direction at a mutual distance,
wherein, in order to produce the translation movement, the teeth (26) of the drive pinion (16) which rotates in the direction of rotation run into the bolt gaps (21) on the drive rack (17) and act on the drive rack bolts (18) with the tooth flank (28, 29) which leads in the direction of rotation, while the other of the tooth flanks (28, 29) is provided as the tooth flank (28, 29) which trails in the direction of rotation,
**characterized**
**in that** the teeth (26) of the drive pinion (16) have an adaptive tooth thickness,
• **in that** the teeth (26) of the drive pinion (16) are divided to form a rigid tooth part (30) and a movable tooth part (31), with one of the tooth flanks (28, 29) being provided on the rigid tooth part (30) and one being provided on the movable tooth part (31), which tooth flanks limit the tooth thickness of the relevant tooth (26),
• **in that** the rigid tooth part (30) is rigidly connected to the pinion base body (24) of the drive pinion (16) in the circumferential direction of the drive pinion (16) and
• **in that** the movable tooth part (31) is movable relative to the rigid tooth part (30) in the circumferential direction of the drive pinion (16) and can be positioned by means of an adjusting device (39),
• the movable tooth part (31) being movable relative to the rigid tooth part (30) in the circumferential direction of the drive pinion (16) by the movable tooth part (31) being mounted on the pinion base body (24) and/or on the rigid tooth part (30) so as to be pivotable about a pivot axis (32) which extends in parallel with the pinion axis (22) of the drive pinion (16) and is formed by a rotational joint (33) which has on the movable tooth part (31) and on the pinion base body (24) and/or the rigid tooth part (30) a joint socket (34) on the one hand, and a joint head (35) on the other hand,
**in that** the teeth (26) of the drive pinion (16) have a maximum and a minimum tooth thickness due to their adaptivity, the maximum tooth thickness being at least as large as a maximum gap width of the bolt gaps (21) of the drive rack bolts (18) on the drive rack (17) and the minimum tooth thickness not being greater than a minimum gap width of the bolt gaps (21) and
**in that** the thickness of the teeth (26) run into the bolt gaps (21) of the drive rack bolts (18) can be adjusted by means of the adjusting device (39) in such a way that the teeth (26) are accommodated without play in the bolt gaps (21) in the feed direction (12), in particular preloaded, with the rigid tooth part (30) and the movable tooth part (31), against the drive rack bolts (18) forming the relevant bolt gap (21).

2. Rack-and-pinion drive according to claim 1, **characterized in that** the drive rack bolts (18) are mounted on the drive rack rod (19) so as to be rotatable about a bolt axis (20).

3. Rack-and-pinion drive according to either of the preceding claims, **characterized in that**
• the adjusting device (39) has a spring element (40, 43) which, as seen in the circumferential direction of the drive pinion (16), is effective between the rigid tooth part (30) and the movable tooth part (31) of the teeth (26) of the drive pinion (16),
• the movable tooth part (31) is movable in the direction of the rigid tooth part (30) against the action of a restoring force generated by the spring element (40, 43) and
• the teeth (26) run into the bolt gaps (21) of the drive rack bolts (18) can be preloaded with the rigid tooth part (30) and the movable tooth part (31) against the drive rack bolts (18) forming the bolt gaps (21) due to the restoring force generated by the spring element (40, 43).

4. Rack-and-pinion drive according to claim 3, **characterized in that**, as a result of the rigid tooth part (30) and/or the movable tooth part (31) of a tooth (26) of the drive pinion (16) which runs into a bolt gap (21) being acted upon by the drive rack bolts (18) forming the bolt gap (21), the movable tooth part (31) of the tooth (26) can be moved in the direction of the associated rigid tooth part (30) of the tooth (26) and the restoring force can thereby be generated by the spring element (40, 43).

5. Rack-and-pinion drive according to either claim 3 or claim 4, **characterized in that** an elastomer is provided as the spring element (40).

6. Rack-and-pinion drive according to any of claims 3 to 5, **characterized in that** a bearing point (41, 44), preferably a recess, for the spring element (40, 43) is provided on the rigid tooth part (30) and/or on the movable tooth part (31) of the teeth (26) of the drive pinion (16).

7. Rack-and-pinion drive according to claim 6, **characterized in that**, of the rigid tooth part (30) and the movable tooth part (31) of the teeth (26) of the drive pinion (16), one of the tooth parts (30, 31) has a recess as a bearing point (41, 44) for the spring element (40, 43), which recess accommodates the spring element (40, 43), and **in that** a projection (42) is provided on the other tooth part (30, 31), which projection projects on the relevant tooth part (30, 31) toward the spring element (40, 43) on the tooth part (30, 31) provided with the recess.

8. Rack-and-pinion drive according to any of the preceding claims, **characterized in that** the adjusting device (39) has a piston-cylinder arrangement (45) which can be actuated in a controlled manner and is connected on the one hand to the relevant rigid tooth part (30) and on the other hand to the relevant movable tooth part (31).

9. Rack-and-pinion drive according to any of the preceding claims, **characterized in that** the joint head (35) is held in the joint socket (34) in the radial direction of the pivot axis (32) of the movable tooth part (31) by the joint socket (34) engaging over the joint head (35) in a pincer-like manner.

10. Rack-and pinion drive according to any of the preceding claims, **characterized in that**, as the rotational joint (33), a hinge joint is provided which has a cylindrical joint head (35) and a groove-shaped joint socket (34) coaxial with the cylindrical joint head (35), the axis of the cylindrical joint head (35) and the groove-shaped joint socket (34) forming the pivot axis (32) of the movable tooth part (31) and extending in parallel with the pinion axis (22) of the drive pinion (16).

11. Rack-and-pinion drive according to claim 10, **characterized in that** the cylindrical joint head (35) and the grove-shaped joint socket (34) are plugged into one another in the axial direction and **in that** the groove-shaped joint socket (34) and the cylindrical joint head (35) accommodated by it are provided on at least one side situated in the axial direction with a cover (36, 37) which is connected to the pinion base body (24) and/or to the rigid tooth part (30) and which secures the cylindrical joint head (35) and the groove-shaped joint socket (34) against loosening in the axial direction.

12. Workpiece transfer device comprising a workpiece carrier (7), comprising a stationary device unit (14) and comprising a rack-and-pinion drive (13) which is provided between the stationary device unit (14) and the workpiece carrier (7) and which has a drive rack (17) and a drive pinion (16) as drive components and by means of which the workpiece carrier (7) can be moved from a starting position into a target position with a translational movement, carried out in a feed direction (12), relative to the stationary device unit (14), with one of the drive components of the rack-and-pinion drive (13) being provided on the workpiece carrier (7) and the other drive component of the rack-and-pinion drive (13) being provided on the stationary device unit (14), **characterized in that** the rack-and-pinion drive (13) according to any of the preceding claims is provided as the rack-and-pinion drive (13).

13. Machine arrangement for machining workpieces, in particular metal sheets (2), comprising a machining device (3) which has a working area in which a workpiece, in particular a metal sheet (2), can be machined by means of a machining unit of the machining device (3), and comprising a workpiece transfer device (4) by means of which a workpiece carrier (7) loaded with a workpiece can be fed to the working area of the machining device (3) and/or removed from the working area of the machining device (3), **characterized in that** the workpiece transfer device (4) according to claim 12 is provided as the workpiece transfer device (4).

## Revendications

1. Entraînement à crémaillère comprenant une crémaillère (17) et un pignon d'entraînement (16), la crémaillère (17) et le pignon d'entraînement (16) étant mobiles l'un par rapport à l'autre selon un mouvement de translation effectué dans un sens d'avance (12),
• du fait que la crémaillère (17) comporte des boulons de crémaillère (18) qui sont prévus sur une barre de crémaillère (19) avec formation d'espace de boulon intermédiaire (21) et qui sont adjacents les uns aux autres dans le sens d'avance (12), les espaces de boulon intermédiaires (21) ayant une largeur d'espace intermédiaire lorsqu'ils sont vus dans le sens d'avance (12) et
• du fait que le pignon d'entraînement (16) peut être entraîné au moyen d'un moteur d'entraînement (15) sur un axe de pignon (22) s'étendant dans la direction transversale au sens d'avance (12) suivant un mouvement de rotation dans un sens de rotation qui s'étend dans la direction circonférentielle du pignon d'entraînement (16) et du fait que le pignon d'entraînement (16) comporte un corps de pignon de base (24) et une denture frontale (25) prévue sur le corps de pignon de base (24) et pourvue de dents (26) qui sont adjacentes les unes aux autres dans la direction circonférentielle du pignon d'entraînement (26) avec formation d'espaces de dent intermédiaires (27) et qui présentent dans la direction circonférentielle une épaisseur de dent qui est elle-même limitée par deux flancs de dent (28, 29) adjacents l'un à l'autre à une distance mutuelle dans la direction circonférentielle,
pour générer le mouvement de translation, les dents (26) du pignon d'entraînement (16) en rotation dans le sens de rotation pénétrant dans les espaces de boulon intermédiaires (21) de la crémaillère (17) et agissant sur les boulons de crémaillère (18) avec cel des flancs de dents (28, 29) qui sont devant dans le sens de rotation, tandis que l'autre des flancs de dent (28, 29) est prévu comme un flanc de dent (28, 29) qui est derrière dans le sens de rotation,
**caractérisé en ce que**
les dents (26) du pignon d'entraînement (16) ont une épaisseur de dent adaptative,
• du fait que les dents (26) du pignon d'entraînement (16) sont divisées pour former une partie de dent rigide (30) et une partie de dent mobile (31), les flancs de dent (28, 29) qui limitent l'épaisseur de dent de la dent respective (26) étant prévus pour l'un sur la partie de dent rigide (30) et pour l'autre sur la partie de dent mobile (31),
• du fait que la partie de dent rigide (30) est reliée de manière rigide au corps de pignon de base (24) du pignon d'entraînement (16) dans la direction circonférentielle du pignon d'entraînement (16) et
• du fait que la partie de dent mobile (31) est mobile par rapport à la partie de dent rigide (30) dans la direction circonférentielle du pignon d'entraînement (16) et peut être réglée au moyen d'un dispositif de réglage (39),
• la partie de dent mobile (31) étant mobile par rapport à la partie de dent rigide (30) dans la direction circonférentielle du pignon d'entraînement (16) du fait que la partie de dent mobile (31) est montée sur le corps de pignon de base (24) et/ou sur la partie de dent rigide (30) de manière pivotante sur un axe de pivotement (32) qui s'étend parallèlement à l'axe de pignon (22) du pignon d'entraînement (16) et qui est formé par une articulation pivotante (33) qui comporte, au niveau de la partie de dent mobile (31) et du corps de dent de base (24) et/ou de la partie de dent rigide (30), d'une part une cavité d'articulation (34) et d'autre part une tête d'articulation (35),
les dents (26) du pignon d'entraînement (16) ont une épaisseur de dent maximale et une épaisseur de dent minimale en raison de leur adaptabilité, l'épaisseur de dent maximale étant au moins aussi grande qu'une largeur d'espace intermédiaire maximale des espaces de boulon intermédiaires (21) des boulons de crémaillère (18) de la crémaillère (17) et l'épaisseur de dent minimale n'étant pas supérieure à une largeur d'espace intermédiaire minimale des espaces de boulon intermédiaire (21) et
l'épaisseur des dents (26) qui pénètrent dans les espaces de boulon intermédiaire (21) des boulons de crémaillère (18) peut être réglée au moyen du dispositif de réglage (39) de telle sorte que les dents (26) soient reçues sans jeu dans les espaces de boulon intermédiaires (21) dans le sens d'avance (12), en particulier puissent être précontraintes avec la partie de dent rigide (30) et la partie de dent mobile (31) contre les boulons de crémaillère (18) formant les espaces de boulon intermédiaires (21).

2. Entraînement à crémaillère selon la revendication 1, **caractérisé en ce que** les boulons de crémaillère (18) sont montés sur la barre de crémaillère (19) de manière à pouvoir tourner sur un axe de boulon (20).

3. Entraînement à crémaillère selon l'une des revendications précédentes, **caractérisé en ce que**
• le dispositif de réglage (39) comporte un élément à ressort (40, 43) qui, lorsque l'on regarde dans la direction circonférentielle du pignon d'entraînement (16), est opérant entre la partie de dent rigide (30) et la partie de dent mobile (31) des dents (26) du pignon d'entraînement (16),
• la partie de dent mobile (31) est mobile en direction de la partie de dent rigide (30) en s'opposant à l'action d'une force de rappel générée par l'élément à ressort (40, 43) et
• les dents (26), qui pénètrent dans les espaces de boulon intermédiaires (21) des boulons de crémaillère (18), peuvent être précontraintes avec la partie de dent rigide (30) et la partie de dent mobile (31) contre les boulons de crémaillère (18) formant l'espace de boulon intermédiaire (21) en raison de la force de rappel générée par l'élément à ressort (40, 43).

4. Entraînement à crémaillère selon la revendication 3, **caractérisé en ce que**, en raison du fait que la partie de dent rigide (30) et/ou la partie de dent mobile (31) d'une dent (26), pénétrant dans un espace de boulon intermédiaire (21), du pignon d'entraînement (16) sont contraintes, par les boulons de crémaillère (18) formant l'espace de boulon intermédiaire (21), la partie de dent mobile (31) de la dent (26) peut être déplacée en direction de la partie de dent rigide associée (30) de la dent (26) et la force de rappel peut ainsi être générée par l'élément à ressort (40, 43).

5. Crémaillère selon la revendication 3 ou la revendication 4, **caractérisée en ce qu'**un élastomère est prévu comme élément à ressort (40).

6. Entraînement à crémaillère selon l'une des revendications 3 à 5, **caractérisé en ce qu'**un emplacement formant palier (41, 44), de préférence un évidement, destiné à l'élément à ressort (40, 43) est prévu sur la partie de dent rigide (30) et/ou sur la partie de dent mobile (31) des dents (26) du pignon d'entraînement (16).

7. Entraînement à crémaillère selon la revendication 6, **caractérisé en ce que**, parmi la partie de dent rigide (30) et la partie de dent mobile (31) des dents (26) du pignon d'entraînement (16), l'une des parties de dent (30, 31) comporte comme emplacement formant palier (41, 44) destiné à l'élément à ressort (40, 43) un évidement qui reçoit l'élément à ressort (40, 43) et **en ce qu'**une saillie (42) est prévue sur l'autre partie de dent (30, 31), laquelle saillie est saillante au niveau de ladite partie de dent (30, 31) en direction de l'élément à ressort (40, 43) situé au niveau de la partie de dent (30, 31) pourvue de l'évidement.

8. Entraînement à crémaillère selon l'une des revendications précédentes, **caractérisé en ce que** le dispositif de réglage (39) comporte un ensemble piston-cylindre (45) à actionnement commandé qui est relié à la partie de dent rigide respective (30) d'une part et à la partie de dent mobile respective (31) d'autre part.

9. Entraînement à crémaillère selon l'une des revendications précédentes, **caractérisé en ce que** la tête d'articulation (35) est maintenue dans la cavité d'articulation (34) dans la direction radiale de l'axe de pivotement (32) de la partie de dent mobile (31) du fait que la cavité d'articulation (34) s'engage comme une pince par-dessus la tête d'articulation (35).

10. Entraînement à crémaillère selon l'une des revendications précédentes, **caractérisée en ce qu'**une articulation à charnière est prévue comme l'articulation pivotante (33) et est munie d'une tête d'articulation cylindrique (35) et d'une cavité d'articulation (34) en forme de gouttière coaxiale à la tête d'articulation cylindrique (35), l'axe de la tête d'articulation cylindrique (35) et de la cavité d'articulation (34) en forme de gouttière formant l'axe de pivotement (32) de la partie de dent mobile (31) et s'étendant parallèlement à l'axe de pignon (22) du pignon d'entraînement (16).

11. Entraînement à crémaillère selon la revendication 10, **caractérisé en ce que** la tête d'articulation cylindrique (35) et la cavité d'articulation (34) en forme de gouttière sont emboîtées l'une dans l'autre dans la direction axiale et **en ce que** la cavité d'articulation (34) en forme de gouttière et la tête d'articulation cylindrique (35) reçue par celle-ci est pourvue, sur au moins un côté placé dans la direction axiale, d'un couvercle (36, 37) qui est relié au corps de dent de base (24) et/ou à la partie de dent rigide (30) et qui empêche la tête d'articulation cylindrique (35) et la cavité d'articulation (34) en forme de gouttière de se désolidariser dans la direction axiale.

12. Dispositif de transfert de pièce muni d'un porte-pièce (7), d'une unité de dispositif fixe (14) et d'un entraînement à crémaillère (13) qui est prévu entre l'unité de dispositif fixe (14) et le porte-pièce (7), qui comporte comme composant d'entraînement une crémaillère (17) et un pignon d'entraînement (16) et qui permet de déplacer le porte-pièce (7) d'une position de départ à une position cible suivant un mouvement de translation, effectué dans un sens d'avance (12), par rapport à l'unité de dispositif fixe (14), l'un des composants d'entraînement de l'entraînement à crémaillère (13) étant prévu sur le porte-pièce (7) et l'autre élément d'entraînement de l'entraînement à crémaillère (13) étant prévu sur l'unité de dispositif fixe (14), **caractérisé en ce que** l'entraînement à crémaillère (13) selon l'une des revendications précédentes est prévu comme entraînement à crémaillère (13) .

13. Ensemble mécanique destiné au traitement de pièces, en particulier de tôles (2), ledit ensemble comprenant un dispositif de traitement (3) qui comporte une zone de travail dans laquelle une pièce, en particulier une tôle (2), peut être traitée au moyen d'une unité de dispositif de traitement (3), et un dispositif de transfert de pièce (4) qui permet d'amener un porte-pièce (7) chargé d'une pièce à la zone de travail du dispositif de traitement (3) et/ou de l'emporter de la zone de travail du dispositif de traitement (3), **caractérisé en ce que** le dispositif de transfert de pièce (4) selon la revendication 12 est prévu comme dispositif de transfert de pièce (4).
